(19) Europäisches Patentamt
European Patent Office
Office européen des brevets

(11) **EP 3 674 371 B1**

(12) **EUROPEAN PATENT SPECIFICATION**

(45) Date of publication and mention
of the grant of the patent:
**13.07.2022 Bulletin 2022/28**

(21) Application number: **18306897.2**

(22) Date of filing: **31.12.2018**

(51) International Patent Classification (IPC):
*C09C 1/46* (2006.01)      *C09C 1/56* (2006.01)
*C08K 3/22* (2006.01)      *C08K 7/06* (2006.01)
*F16D 69/00* (2006.01)      *C01B 32/20* (2017.01)
*F16D 13/60* (2006.01)      *F16D 69/02* (2006.01)

(52) Cooperative Patent Classification (CPC):
**C09C 1/46; C01B 32/20; C09C 1/56; F16D 69/00;
F16D 69/02;** C01P 2002/78; C01P 2004/61;
C01P 2006/12; C01P 2006/80; F16D 13/60;
F16D 2200/0052

(54) **FRICTION MATERIAL COMPRISING GRAPHITE, METHODS OF MAKING FRICTION MATERIALS, AND THEIR USES**

REIBUNGSMATERIAL MIT GRAPHIT, VERFAHREN ZUR HERSTELLUNG VON
REIBUNGSMATERIALIEN UND DEREN VERWENDUNGEN

MATÉRIAU DE FRICTION COMPRENANT DU GRAPHITE, PROCÉDÉS DE FABRICATION DE
MATÉRIAUX DE FRICTION ET LEURS UTILISATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.07.2020 Bulletin 2020/27**

(73) Proprietor: **IMERTECH SAS
75015 Paris (FR)**

(72) Inventors:
• **GULAS, Michal
6713 Malvaglia (CH)**

• **GILARDI, Raffaele
6500 Bellinzona (CH)**
• **SPAHR, Michael E.
6500 Bellinzona (CH)**

(74) Representative: **Haseltine Lake Kempner LLP
Bürkleinstrasse 10
80538 München (DE)**

(56) References cited:
**EP-A1- 3 124 814      WO-A1-2017/125592
WO-A1-2018/046767**

**Description**

FIELD OF THE INVENTION

The present invention relates to friction materials comprising resilient graphitic materials. The invention further relates to methods of making such friction materials, their uses as well as a brake pad comprising such friction materials.

BACKGROUND OF THE INVENTION

Friction materials are used in various applications such as for disc brakes, drum brakes, or clutches, and for final uses in vehicles such as cars, heavy load vehicles, wind mills, railways and the like. Friction materials should meet various requirements, depending on their intended use. Some of the desired properties include good heat dissipation obtained by high thermal conductivity, a clearly defined and stable friction coefficient, good lubrication, high compressibility, vibration damping properties, noise reduction, and low disc brake drag.

The use of asbestos in friction materials has been phased out over the past decades for now obvious reasons of workplace safety, health and due to environmental concerns. Furthermore, the use of copper in friction materials, which combines good thermal conductivity with a good and stable friction coefficient, is being phased out in view of environmental legislation being implemented during the coming years.

Graphite and graphitic carbon have previously been employed in friction materials. In particular, resilient graphitic materials offer the required spring-back properties for use in friction materials. For example, EP 3 088 764 A1 discloses the use of resilient graphitic materials in non-asbestos organic (NAO) brake pads. A resilient graphitic carbon particle is made by expanding and forming a carbonaceous mesophase or coke, followed by graphitisation at 1900 to 2700°C, in order to obtain a degree of graphitization of 80 to 95%, as measured according to X-ray analysis. It has improved volume recovery ratio when removing the added compressive load. In addition, crack formation is reduced, which in turn reduces chipping.

One drawback with using graphitic materials in friction materials is due to the contradictory requirements to the graphitic materials when it comes to spring-back properties and thermal conductivity. Spring-back of graphite is generally correlated to the degree of crystallinity. Without being bound to a theory, the carbon spring-back tends to increase with decreasing crystallinity. For example, amorphous coke with c/2 values above about 0.34 nm and Lc values below about 50 nm will have spring-back values at or above 50%. Also, for graphitized carbon with c/2 below about 0.3356 nm and Lc values of about 100 to about 200 nm will have a lower spring-back. Typical flake-type natural graphite with c/2 values below about 0.3358 nm and Lc values above about 200 nm will have very low spring-back values, for example at or below about 10%. High crystallinity results in high thermal conductivity for heat dissipation, good lubrication for stabilization of friction coefficient, all of which are desirable properties of friction materials. On the other hand, high spring-back leads to high compressibility of the friction material for good vibration damping and reduced noise, and low disc brake drag.

The use of graphitic materials in friction materials therefore leads to a necessary balancing act between opposing properties of the material, requiring a compromise on one or several properties of the friction material. The state of the art therefore constitutes a problem.

WO 2017/125592 A1 relates to compositions comprising at least two different carbonaceous components, at least one being a surface-modified carbonaceous particulate material typically having a relatively high spring-back, and at least one other component being a carbonaceous particulate material (such as graphite) generally having a lower spring-back and/or a higher BET specific surface area than the surface-modified carbonaceous material component.

WO 2018/046767 A1 describes a precursor composition for a negative electrode of a Li-ion battery comprising a metal-based nano-particulate active material, and a carbon matrix having a bulk BET SSA of lower than about 10 m2/g, wherein the carbon matrix comprises at least first and second carbonaceous particulate materials, wherein the BET SSA of the first carbonaceous particulate material is lower than the BET SSA of the second carbonaceous particulate material and of the carbon matrix, wherein the BET SSA of the second carbonaceous particulate is higher than the BET SSA of the first carbonaceous particulate and of the carbon matrix.

EP 3 124 814 A1 relates to a process for the manufacture of a ceramic component *inter alia* comprising a) providing (a precursor of) expanded graphite, b) mixing of a composition comprising the material provided in step a) and one or more materials of the group consisting of carbon fibers and consolidated carbon fiber bundles and obtaining a mixture, wherein the composition does not comprise a liquid binder, c) densifying a defined amount of the mixture obtained in step b) in a mold, d) obtaining a green body of the ceramic component and e) subjecting the green body to reactive melt infiltration, wherein the process neither comprises a step of hardening a binder nor a step of carbonizing the green body of the ceramic component.

## SHORT DESCRIPTION OF THE INVENTION

The above discussed problems are solved by the present invention, as it is defined in the appended claims. More particularly, the present invention provides a material combining good thermal conductivity, and/or a sufficient friction coefficient and/or sufficient lubricity. In addition, the material of the present invention provides sufficiently high spring-back.

In particular, the present invention is embodied by a friction material comprising graphite having a c/2 of 0.3358 nm or less, such as 0.3357 nm or less, or 0.3356 nm or less, and a spring-back of 65% or more. As is known to the skilled person in the art, graphitisation of 95.3% or more corresponds to a c/2 of 0.3358 nm or less. It was found that graphite with these parameters could be obtained, and offered good properties in friction materials. It was found that such materials were particularly advantageous for use in friction pad applications.

According to one embodiment of the present invention, the graphite contained in the friction material has a degree of graphitisation of 95.3% or more, such as 96% or more, such as 97% or more.

According to one embodiment of the present invention, the graphite contained in the friction material has a xylene density of 2.0 g/cm$^3$ or more.

According to one embodiment of the present invention, the graphite contained in the friction material has a crystallinity ($L_c$) of 50 nm or more.

According to one embodiment of the present invention, the graphite contained in the friction material has a BET surface area of 9 m$^2$/g or less.

According to one embodiment of the present invention, the graphite contained in the friction material is a surface-modified graphite. For example the graphite contained in the friction material may be a surface-modified natural graphite or a surface-modified synthetic graphite, or even a mixture of surface-modified natural graphite and surface-modified synthetic graphite, such as for example a surface-modified graphite by a heat treatment and optionally by a surface coating treatment coated graphite.

According to one embodiment of the present invention, the surface modification of the graphite includes a surface modification by heat treatment.

According to one embodiment of the present invention, the surface modification includes an additional coating of the graphite particle surface, wherein said surface coating can be done simultaneously with or separately from the heat treatment, such as for example subsequently to the heat treatment.

According to one further embodiment of the present invention, the surface modification of the graphite includes a surface coating, which may be obtained by a chemical vapour deposition (CVD) process, such as a carbon coating obtained by a CVD process.

According to yet another embodiment of the present invention, the surface modification of the graphite includes a surface modification by heat treatment, and in addition a surface coating obtained for example by a CVD process, coating the graphite surface with amorphous carbon, or with a coating of a carbon precursor at the graphite surface and carbonization by a subsequent heat treatment in an inert gas atmosphere.

Also, after a CVD process, the material is typically hydrophobic. An optional further treatment of the material after the CVD process may help to improve the wettability with water and make the material more hydrophilic, or more hydrophobic if desired. Therefore an optional further oxidation treatment also forms part of the present invention. The degree of oxidations allows to control the hydrophilicity of the graphite surface and therefore its wettability by humidity. The same oxidation can be applied to a graphite material with a surface coating of amorphous carbon.

According to one specific embodiment of the present invention, the friction material comprises from 0.1 wt.-% to 30 wt.-% of graphite having the properties as defined above, based on the total weight of the friction material.

According to one specific embodiment of the present invention, the friction material has a copper content of 5 wt.-% or less, for example a copper content of 0.5 wt. % or less. According to one embodiment of the present invention, the friction material is essentially free of copper.

According to one specific embodiment of the present invention, the friction material has an in-plane thermal conductivity of 1.5 W/mK or greater, as measured according to ASTM E1461 using Laserflash by NETZSCH LFA447.

According to one specific embodiment of the present invention, the friction material has a friction coefficient of 0.5 or less.

According to yet a further embodiment of the present invention, the friction material may comprise one or more further ingredients selected from the groups consisting of resin or cement binders, antimony trisulfide, copper, barium sulphate, metallic powders and fibres, mineral fibres, iron sulphides, coke, other natural, synthetic, expanded graphite, calcium carbonate, mica, talc and zirconia, and mixtures thereof, as well as further ingredients typically used in friction materials, as known to the skilled person in the art.

Also part of the present invention is a method of making a friction material comprising the steps of (a) providing a graphite, (b) subjecting the graphite provided in step (a) to a heat treatment at 600°C or more for 30 minutes or more; and (c) mixing the treated graphite obtained at the end of step (b) with further ingredients and treating to form a friction material, such as for example by compression moulding, or hot compression moulding or curing by heat treatment, or combinations of any of these.

According to one embodiment, the graphite provided may be a natural graphite, or a synthetic graphite, or a mixture of natural and synthetic graphite.

According to one further embodiment, the treatment of step (b) may further include a surface coating treatment, such as for example a CVD treatment, or an amorphous carbon surface coating treatment. According to one further embodiment, treatment step (b) of said method may include a first heat treatment, which is part of a surface coating treatment, such as CVD coating or pitch coating with subsequent carbonization, and a second heat treatment, which is not part of a surface coating treatment, and which may be done before or after the surface coating treatment. According to one further embodiment, the said second heat treatment is a post treatment (ie done after a first treatment such as surface coating treatment).

According to one further embodiment, the said treatment step (b) may not include a surface coating treatment such as a CVD treatment.

Also part of the present invention is the use of a friction material according to the invention, in the production of brake pads, for example in the production of low-copper brake pads, or in the production of copper-free brake pads.

Also part of the present invention is a brake pad comprising a friction material according to the present invention, optionally for use in an electrically powered vehicle.

It is understood that the following description and references to the figures concern exemplary embodiments of the present invention and shall not be limiting the scope of the claims.

## DETAILED DESCRIPTION OF THE INVENTION

The present invention according to the appended claims provides friction materials comprising graphite, wherein the graphite has a c/2 value of 0.3358 nm or less, such as 0.3357 nm or less, or 0.3356 nm or less, and a spring-back of 65% or more. The core of the invention lies in that it has been rendered possible to reconcile the essentially contradicting properties of graphitisation and spring-back of graphite, for effective use in a friction material.

The skilled person in the art will be aware that spring-back of graphite generally depends on its degree of crystallinity. A graphite having a low crystallinity will generally have high spring-back properties, and vice-versa. High spring-back results in low compressibility and compressed density of the graphite powder is reduced.

Friction materials comprising graphitic materials with the combination of physical parameters according to the present invention have not previously been presented.

## Graphitic Materials

According to the present invention, the graphite comprised in the friction material has a c/2 value of 0.3358 nm or less, such as 0.3357 nm or less, or 0.3356 nm or less, and a spring-back of 65% or more, such as for example a spring-back of 70% or more, such as for example a spring-back of 75% or more.

According to the present invention, the graphite comprised in the friction material has a c/2 value of 0.3358 nm or less, such as for example c/2 value of 0.3357 nm or less, or 0.3356 nm or less.

It will be clear to the skilled person in the art that it is most advantageous to have a high degree of graphitisation and a high spring-back. Therefore, it will also be considered a part of the present invention a friction material comprising a graphite having a c/2 value of 0.3358 nm or less and a spring-back of 65% or more, and even a friction material comprising a graphite having a degree of graphitisation of 95.3% or more and a spring-back of 70% or more, and even a friction material comprising a graphite having a c/2 value of 0.3356 nm or less (a degree of graphitisation of 98% or more) and a spring-back of 75% or more.

As discussed in the introductory portion above, a high degree of graphitisation causes good thermal conductivity of the graphite, and therefore good heat dissipation in the friction material comprising the graphite. Also, good spring-back leads to good compressibility of the material, which in turn causes improvements of vibration dampening and noise reduction.

According to one embodiment of the present invention, the graphite comprised in the friction material has a degree of graphitisation of 95.3% or more and a spring-back of 65% or more, such as for example a degree of graphitisation of 96% or more, or a degree of graphitisation of 97% or more, or even a degree of graphitisation of 98% or more.

According to one embodiment of the present invention, the friction material comprises a graphite having a crystallinity $L_c$ of 50 nm or more. For example, the friction material comprises a graphite having a crystallinity $L_c$ of 100 nm or more, or a crystallinity $L_c$ of 150 nm or more, or a crystallinity $L_c$ of 200 nm or more, or even a crystallinity $L_c$ of 250 nm or more. As used herein, the crystallinity $L_c$ designates the average crystallite size of graphite.

According to one embodiment of the present invention, the friction material comprises a graphite having a xylene density of 2.0 g/cm$^3$ or more, such as for example a xylene density of 2.1 g/cm$^3$ or more, such as for example a xylene density of 2.2 g/cm$^3$ or more, such as for example a xylene density of 2.23 g/cm$^3$ or more, such as for example a xylene density of 2.24 g/cm$^3$ or more, such as for example a xylene density of 2.25 g/cm$^3$ or more, or even a xylene density of 2.26 g/cm$^3$ or more. For example, the graphite comprised in the friction material according to one embodiment of the present invention may have a xylene density not higher than 2.26 g/cm$^3$.

A higher xylene density generally indicates higher crystallinity of the graphite, without giving direct information of the numerical values of crystallite size of c/2 distance, therefore indicating an improved thermal diffusivity of the material, giving improved properties for use in a friction material.

According to one embodiment of the present invention, the friction material comprises a graphite having a BET surface area of 9 m$^2$/g or less. For example, the graphite comprised in the friction material according to the present invention may have a BET surface area of 8 m$^2$/g or less, or a BET surface area of 8.0 m$^2$/g or less, or a BET surface area of 7.0 m$^2$/g or less, or a BET surface area of 6.0 m$^2$/g or less, or a BET surface area of 5.0 m$^2$/g or less, or a BET surface area of 4.5 m$^2$/g or less, or even a BET surface area of 4.0 m$^2$/g or less. One advantage of a lower BET surface area is generally the lower resin consumption.

Preparation of Graphitic Materials having the desired properties by surface treatment

According to some embodiments of the present invention, the graphitic material for use in the friction material may be a natural graphite, or a synthetic graphite, or a mixture thereof. For example, the graphitic material may be a surface-treated natural graphite, or a surface-treated synthetic graphite.

According to one embodiment, said graphite can be chosen from expanded graphite and/or non-expanded graphite.

According to a further embodiment, said graphite is chosen from non-expanded graphite.

According to certain embodiments of the present invention, the said surface treatment of the graphitic material may be a heat treatment. For example, the heat treatment may be a heat treatment under N$_2$ at a temperature of 600°C or higher, such as a temperature of 800°C or higher, or a temperature of 1000°C or higher, or a temperature of 1200°C or higher, such as for example a temperature of 1400°C.

According to certain embodiments of the present invention, the said surface treatment of the graphitic material may be a surface-coating treatment such as a chemical vapour deposition (CVD) treatment, or such as a coating of the graphite particles with a carbon precursor and subsequent carbonization in an inert gas atmosphere.

Typical surface-coating processes are based on a coating of a carbon precursor such as coal tar or petroleum pitch (typically referred to as pitch coating), or an organic polymer such as a phenol resin or polystyrene, polyvinyl alcohol, furan resin, or furfuryl alcohol (known to result in a high carbon yield upon carbonization) on the graphite surface in a dry or wet mixing process and a subsequent carbonization at elevated temperature in an inert gas atmosphere [Wan et al., Journal of Applied Electrochemistry, 2009, 39, 1081; Yoon et al. Journal of Power Sources, 2001, 94, 68]. Another known process described in the art includes the coating of pyrolytic carbon at the graphite surface achieved by treating the graphite particles in a hydrocarbon gas or vapours at elevated temperatures (chemical vapour deposition), typically referred to as CVD coating. The described surface coatings create coatings of amorphous carbon at the surface of the graphite particles.

These examples of surface modifications encompass a heat treatments and surface coating treatments, which are for example simultaneous in case of a CVD coating and independent in case of a pitch coating of a carbon precursor with subsequent carbonization

During CVD processes, a carbon source in gas phase, usually hydrocarbon, is decomposed at elevated temperatures and carbon particles are deposited as so called pyrolytic carbon on the graphite surface. A hardening effect of pyrolytic carbon, especially isotropic carbon has been shown in the literature (see e.g. Handbook Of Carbon, Graphite, Diamond And Fullerenes, Properties, Processing and Applications, Hugh O. Pierson, published in 1993 by Noyes Publications, ISBN: O-8155-1339-9, Printed in the United States, Published in the United States of America by Noyes Publications Mill Road, Park Ridge, New Jersey 07656). With its random structure, deposited isotropic pyrolytic carbon lacks orientation and as a result is very hard.

According to certain embodiments, a CVD process may be performed using for example a rotary kiln, a fluidised bed furnace or a fixed bed furnace as is known from prior art applications WO 2016/008951 or EP 0 977 292. According to the methods disclosed in these publications, a hydrocarbon gas such as propane, methane or toluene and benzene vapours are decomposed at temperatures between 600°C and 1200°C. The obtained final materials are coated with a 10 nm to 100 nm continuous layer of amorphous carbon and 0.5 to 30 wt.-% can have hydrophobic or hydrophilic nature. Any other known CVD processes for depositing pyrolitic carbon may also be employed, such as for example thermal CVD, Plasma Enhanced CVD, Hot-Filament CVD, Low Pressure CVD, Liquid Injection CVD, etc.

More detailed methods of making the surface treated graphitic materials for use in friction materials are discussed further below.

According to the present invention, such prepared carbon coated graphite materials were analysed and an increase of spring-back was indeed observed. Besides the effect of the pyrolytic carbon that acts as a hardener as described above, a heat treatment in an inert atmosphere has effect of increasing spring-back. It is speculated that already at temperatures of > 500°C with significant residence time, small amounts of non graphitic carbon inside graphite particles undergo structural changes which lead to an increase in spring-back.

For these reasons, it is part of the present invention to provide friction materials comprising graphitic materials derived from surface treated synthetic or natural graphite, wherein the said surface treatment comprises a heat treatment under inert atmosphere, or a surface coating treatment such as CVD treatment, or both of these which may be carried out simultaneously or subsequently.

Friction Material

According to one embodiment of the present invention, a friction material is provided, comprising a graphitic material as discussed above, wherein the said graphitic material is comprised in the said friction material in an amount from 0.1 wt.-% to 30 wt.-%, based on the total weight of the friction material.

For example, the said graphitic material may be present in the friction material in an amount of 0.1 wt.-% or more, such as for example in an amount of 0.1 wt.-% or more, or in an amount of 0.5 wt.-% or more, or in an amount of 1 wt.-% or more, or in an amount of 5 wt.-% or more, or in an amount of 10 wt.-% or more, or in an amount of 15 wt.-% or more, or in an amount of 20 wt.-% or more, or in an amount of 25 wt.-% or more, such as for example in an amount of about 30 wt.-%.

For example, the said graphitic material may be present in the friction material in an amount of 30 wt.-% or less, such as for example in an amount of 25 wt.-% or less, or in an amount of 20 wt.-% or less, or in an amount of 15 wt.-% or less, or in an amount of 10 wt.-% or less, or in an amount of 5 wt.-% or less, or in an amount of 1 wt.-% or less, or in an amount of 0.5 wt.-% or less, or in an amount of about 0.1 wt.-%.

For example, the said graphitic material according to the invention may be present in the friction material in an amount from 0.5 wt.-% to 30 wt.-%, such as for example from 1 wt.-% to 25 wt.-%, or for example from 2 wt.-% to 10 wt.-%, based on the total amount of friction material.

The friction material may further comprise other materials suitable for use in a friction material as known to the skilled person in the art, such as for example resin or cement binders, antimony trisulfide, copper, barium sulphate, metallic powders and fibres, mineral fibres, iron sulphides, coke, other natural, synthetic, or expanded graphite, calcium carbonate, mica, talc and zirconia and the like. For example, the friction material may further comprise expanded graphite (e.g. TIMREX, C-THERM) in case of high thermal conductivity friction materials. According to certain embodiments, the friction material comprises less than 5 wt.-% copper, such as for example less than 1 wt.-% copper, or less than 0.5 wt.-% copper, or less than 0.1 wt.-% copper. According to certain embodiments, the friction material is free of copper. As used herein a friction material is considered free of copper if it comprises less than 0.05 wt.-% copper, or no detectable copper. The friction material may further comprise expanded graphite (e.g. TIMREX C-THERM) for example in the case of a higher need of thermal conductivity.

The friction material according to the present invention may have an in-plane thermal conductivity of 1.5 W/mK or greater, such as for example 5 W/mK or higher, as measured according to ASTM E1461 using Laserflash by NETZSCH LFA447.

The friction material according to the present invention may have a friction coefficient of 0.5 or less, for example between 0.2 and 0.5, or between 0.3 and 0.5.

Method of making a Friction Material

According to one embodiment of the present invention, a friction material may be formed by providing a graphitic material having a spring-back of 40% or more, or 41% or more, and a c/2 value of 0.3358 nm or less, such as 0.3357 nm or less, or 0.3356 nm or less. Such graphites may be obtained using the methods as discussed above, including a step of heat treatment and/or surface coating treatment of a synthetic or natural particulate graphite, such as CVD treatment.

According to the present invention, a friction material may be formed by providing a graphite, subjecting the provided graphite to a heat treatment at 600°C or more for 30 minutes or more; and mixing the obtained treated graphite with further ingredients and treating to form a friction material.

Such further ingredients can be selected from the group consisting of resin or cement binders, antimony trisulfide, copper, barium sulphate, metallic powders and fibres, mineral fibres, iron sulphides, coke, other natural, synthetic, expanded graphite, calcium carbonate, mica, talc and zirconia, and/or other ingredients typically used in friction materials and mixtures thereof.

After mixing with these further ingredients, the mixture could be treated compression moulding, such as cold compression moulding, or hot compression moulding, or by curing by heat treatment, or combinations of these.

The graphite provided in the method according to the invention may be selected from a natural graphite, a synthetic graphite and mixtures thereof. For example, the said graphite may be a ground natural graphite or a ground synthetic graphite, or a ground combination of natural and synthetic graphites.

The said heat treatment may be carried out at a temperature of 700°C or more, or 800°C or more, or 850°C or more. The said heat treatment may be carried out during a duration of 30 minutes or more, preferably 60 minutes or more, or even 120 minutes or more. According to one embodiment, said thermal treatment may be carried out at a temperature comprised between 600°C and 850°C during a duration of 120 minutes or more.

According to one embodiment, the heat treatment is carried out at about or above 1000°C, for at least 30 minutes. According to one embodiment, the heat treatment is carried out at about or above 1000°C, for at least 60 minutes. According to one embodiment, the heat treatment is carried out at about or above 1200°C, for at least 30 minutes. According to one embodiment, the heat treatment is carried out at about or above 1200°C, for at least 60 minutes. According to one embodiment, the heat treatment is carried out at about or above 1300°C, for at least 30 minutes. According to one embodiment, the heat treatment is carried out at about or above 1300°C, for at least 60 minutes. According to one embodiment, the heat treatment is carried out at about or above 1500°C, for at least 30 minutes. According to one embodiment, the heat treatment is carried out at about or above 1500°C, for at least 60 minutes.

According to one embodiment of the present invention, step (b) of the method of making the friction material may include a surface coating, such as CVD treatment, wherein the heat treatment may be carried out simultaneously to the coating treatment, or the surface coating treatment may be carried out prior to the heat treatment, for example coating of the graphite surface with a carbon precursor with subsequent carbonization under inert gas, said carbonization being in this case the heat treatment. According to some embodiments of the present invention, such CVD treatment for example uses an amorphous hydrocarbon gas, such as methane, ethane, propane, butane, benzene or toluene, in the presence of a carrier gas such as nitrogen or argon.

According to one separate embodiment, the said step (b) comprises a separate CVD treatment (which encompass a heat treatment and a surface coating treatment) and a separate heat treatment (which is not part of a CVD treatment), as described above. In this embodiment, the said heat treatment is independent of the said CVD treatment, and both treatments may be carried out subsequently to each other, with or without any other intermediate steps such as cooling, quenching, or chemical treatment.

According to one embodiment of the present invention, the provided graphite comprises a natural graphite and step (b) includes a heat treatment and a surface coating treatment.

According to one further embodiment, step (b) of said method may include a first heat treatment, which is part of a surface coating treatment (such as CVD coating or pitch coating with subsequent carbonisation) and a second heat treatment (which is not part of a surface coating treatment), which second heat treatment can be carried out before or after the surface coating treatment. According to a further embodiment, such second heat treatment is a post treatment.

According to one further embodiment, step (b) of said method may not include a surface coating treatment.

According to one embodiment of the present invention, the provided graphite comprises a synthetic graphite and the method step (b) may or may not comprise a surface coating treatment, such as a CVD treatment.

Furthermore, according to the present invention, various other materials for forming a friction material are provided, such as e.g. resin or cement binders, antimony trisulfide, copper, barium sulphate, metallic powders and fibres, mineral fibres, iron sulphides, coke, other natural, synthetic, or expanded graphite, calcium carbonate, mica, talc and zirconia and the like.

Also part of the present invention is the use of the graphitic materials as disclosed herein in the formation of a friction material, and the use of such a friction material in the formation of brake pads for disc brakes, drum brakes, or clutches, and for application in vehicles such as cars, including electric cars, heavy load vehicles, railways and the like.

For electric vehicles, as there is no noise coming from the engine, it is even more advantageous to use a brake pad that generates reduced noise.

The friction material according to the invention may also be used for example in carbon brushes and bipolar plates for fuel cells, or for disc brakes, drum brakes, or clutches, and for application in vehicles such as cars, heavy load vehicles, wind mills, railways and the like.

According to one embodiment of the present invention, the provided graphite may be used for example in carbon brushes and bipolar plates for fuel cells, for self-lubricating polymer compounds.

Also part of the present invention are methods for improving the performance of brake pads, comprising employing a friction material according to the present invention, which includes a graphite having a c/2 value of 0.3358 nm or less, such as 0.3357 nm or less, or 0.3356 nm or less, and a spring-back of 65% or more. The performance of the brake pad may be assessed in terms of noise reduction, durability, vibration dampening, braking power, friction coefficient stabilisation, and the like.

Also part of the present invention are brake pads comprising the friction material according to the invention.

Graphite spring-back

The spring-back is a source of information regarding the resilience of compacted graphite powders. A defined amount of powder is poured into a die of 20 mm diameter. After inserting the punch and sealing the die, air is evacuated from the die. Compression force of 1.5 metric tons is applied resulting in a pressure of 0.477 t/cm$^2$ and the powder height is recorded. This height is recorded again after pressure has been released. Spring-back is the height difference in percent relative to the height under pressure.

Interlayer spacing c/2 and degree of graphitisation

The interlayer space c/2 was determined by X-ray diffractometry. The angular position of the peak maximum of the [002] reflection profiles were determined and, by applying the Bragg equation, the interlayer spacing was calculated (Klug and Alexander, Xray diffraction Procedures, John Wiley & Sons Inc., New York, London (1967)). To avoid problems due to the low absorption coefficient of carbon, the instrument alignment and nonplanarity of the sample, an internal standard, silicon powder, was added to the sample and the graphite peak position was recalculated on the basis of the position of the silicon peak. The graphite sample was mixed with the silicon standard powder by adding a mixture of polyglycol and ethanol. The obtained slurry was subsequently applied on a glass plate by means of a blade with 150 $\mu$m spacing and dried.

Interlayer spacing ($d_{002}$) and the degree of graphitisation (g) are directly related by the following equation:

$$\text{Degree of graphitisation: } g = \frac{(0.3440 - d_{002})}{(0.3440 - 0.3354)}$$

Graphite crystallite size L$_c$

Crystallite size L$_c$ is determined by analysis of the (002) and (004) diffraction profiles. For the present invention, the method suggested by Iwashita (N. Iwashita, C. Rae Park, H. Fujimoto, M. Shiraishi and M. Inagaki, Carbon 42, 701-714 (2004)) is used. The algorithm proposed by Iwashita has been specifically developed for carbon materials. The widths of the line profiles at the half maximum of sample and reference are measured. By means of a correction function, the width of pure diffraction profile can be determined. The crystallite size is subsequently calculated by applying Scherrer's equation (P. Scherrer, Gottinger-Nachrichten 2 (1918) p. 98).

Xylene density

The analysis is based on the principle of liquid exclusion as defined in DIN 51 901. Approximately 2.5 g (accuracy 0.1 mg) of powder is weighed in a 25 mL pycnometer. Xylene is added under vacuum (15 Torr). After a few hours dwell time under normal pressure, the pycnometer is conditioned and weighed. The density represents the ratio of mass and volume. The mass is given by the weight of the sample and the volume is calculated from the difference in weight of the xylene filled pycnometer with and without sample powder.

Specific BET surface area

The method is based on the registration of the absorption isotherm of liquid nitrogen in the range p/p0 = 0.04 - 0.26, at 77 K. Following the procedure proposed by Brunauer, Emmet and Teller (Adsorption of Gases in Multimolecular Layers, J. Am. Chem. Soc., 1938, 60, 309-319), the monolayer capacity can be determined. On the basis of the cross-sectional area of the nitrogen molecule, the monolayer capacity and the weight of sample, the specific surface can then be calculated.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

EXAMPLES

*Example 1: hydrophobic CVD coated synthetic graphite, using rotary furnace*

Ground synthetic graphite "GRAPHITE SGA", having a particle size distribution of $D_{10} = 5$ $\mu$m and $D_{90} = 73$ $\mu$m, was used as a starting material for improving its spring-back and other properties to be used as friction material comprising graphite. The starting material was fed using single screw into a rotary kiln reactor heated to 1050°C in the continuous way for two hours and producing around 2000 g of material. Chemical vapour deposition (CVD) treatment was performed using a mixture of hydrocarbon and inert gas (amorphous carbon precursor: $C_3H_8$ (3 L/min) and carrier gas: $N_2$ (1 L/min)), fed into the reactor to maintain the pressure in the reactor at 0 to 8 mbar above atmospheric pressure. The inclination of the tube was set to 4° and rotational speed to 6 rpm, with a residence time in the kiln of about 30 minutes. To eliminate any amount of polycyclic aromatic hydrocarbons (PAH), a further treatment in a muffle furnace or in a rotary furnace at 700°C in inert atmosphere ($N_2$) was applied.

The properties of the untreated starting material "GRAPHITE SGA" and of the obtained high spring-back material "GRAPHITE SG HSB A" are listed in table 1:

Table 1

| Graphite | SGA (comparative) | SG HSB A (invention) |
|---|---|---|
| Type | synthetic | treated synthetic |
| Wettability | hydrophilic | hydrophobic |
| $D_{10}$ [$\mu$m] | 5 | 8 |
| $D_{90}$ [$\mu$m] | 73 | 85 |
| Spring-back [%] | 19.4 | 69.4 |
| Lc [nm] | 150 | 150 |
| c/2 [nm] | 0.3358 | 0.3358 |
| degree of graphitization [%] | 95.3 | 95.3 |
| Xylene density [g/cm³] | 2.25 | 2.25 |
| B.E.T. [m²/g] | 6 | 2.4 |

*Example 2: hydrophilic CVD coated natural graphite, using rotary furnace and additional heat treatment*

Flaky natural graphite "GRAPHITE NGB", having a particle size distribution of $D_{10} = 6$ $\mu$m and $D_{90} = 42$ $\mu$m, was used as a starting material for a hydrophilic graphitic friction material, based on a treated natural graphite with high spring-back. The starting material was continuously fed using into a rotary kiln reactor externally heated to 1050°C for two hours and producing around 700 g of material. Chemical vapour deposition (CVD) treatment was performed using a mixture of hydrocarbon and inert gas (amorphous carbon precursor: $C_3H_8$ (3 L/min) and carrier gas: $N_2$ (1 L/min)), fed into the reactor to maintain the pressure in the reactor at 0 to 8 mbar above atmospheric pressure. The inclination of the tube was set to 4° and rotational speed to 6 rpm, with a residence time in the kiln of about 30 minutes.

To improve the wettability of the obtained CVD modified "GRAPHITE NGB", a further process step was added over Example 1. The obtained CVD modified "GRAPHITE NGB" was fed into the rotary furnace heated to 650°C filled with an oxygen containing atmosphere (flow of synthetic air of 2 L/min) with inclination set to 6° and rotational speed of 6 rom. 350 g of material was fed in over about 30 minutes.

The properties of the untreated starting material "GRAPHITE NGB" and of the obtained high spring-back material "GRAPHITE NG HSB B" are listed in table 2:

Table 2

| Graphite | NGB (comparative) | NG HSB B (reference[*]) |
|---|---|---|
| Type | natural | treated natural |
| Wettability | hydrophilic | hydrophilic |
| $D_{10}$ [$\mu$m] | 6 | 7 |

(continued)

| Graphite | NGB (comparative) | NG HSB B (reference[*]) |
|---|---|---|
| $D_{90}$ [μm] | 42 | 45 |
| Spring-back [%] | 6.7 | 55.6 |
| Lc [nm] | 450 | 370 |
| c/2 [nm] | 0.3356 | 0.3355 |
| degree of graphitization [%] | 97.7 | 98.8 |
| Xylene density [g/cm$^3$] | 2.25 | 2.256 |
| B.E.T. [m$^2$/g] | 4.5 | 4.5 |
| [*] not according to the invention | | |

*Example 3: CVD treated synthetic graphite, using fluidised bed*

Potato-shaped synthetic graphite "GRAPHITE PSG", having a particle size distribution of $D_{10}$ = 7 μm and $D_{90}$ = 36 μm, was used as a starting material for a fluidised bed batch process. The starting material (8500 g) was loaded into a fluidised bed reactor, which was then heated to 920°C under a nitrogen atmosphere. CVD treatment was performed using a mixture of hydrocarbon and inert gas (amorphous carbon precursor: toluene $C_7H_8$ and carrier gas: $N_2$) for 260 minutes. Afterwards, the reactor and the treated graphite were cooled down under a nitrogen atmosphere. When the material reached ambient temperature it was discharged from the fluidised bed.

The properties of the untreated starting material "GRAPHITE PSG" and of the obtained high spring-back material "GRAPHITE PSG HSB C" are listed in table 3:

Table 3

| Graphite | PSG (comparative) | PSG HSB C (invention) |
|---|---|---|
| Type | synthetic | treated synthetic |
| Wettability | hydrophilic | hydrophobic |
| $D_{10}$ [μm] | 7 | 8 |
| $D_{90}$ [μm] | 36 | 34 |
| Spring-back [%] | 11.7 | 72.8 |
| Lc [nm] | 170 | 160 |
| c/2 [nm] | 0.3357 | 0.3357 |
| degree of graphitization [%] | 96.5 | 96.5 |
| Xylene density [g/cm$^3$] | 2.26 | 2.254 |
| B.E.T. [m$^2$/g] | 6.9 | 1.8 |

*Example 4: heat treated synthetic graphite, using box furnace*

Around 450 g of ground synthetic graphite "GRAPHITE PSG" (see Example 3) was placed in a crucible and put into a high temperature gas-tight box furnace. The starting material having a spring-back of 12% was heated up with ramp up of 10°C/min to 1500°C. This was done under a constant nitrogen flow of 10 L/min. When reaching 1500°C, the temperature was kept for a dwelling time of 60 minutes. Afterwards, the sample was cooled down in nitrogen atmosphere (still under flow of 10 L/min), discharged and analysed once ambient temperature was reached.

The properties of the untreated starting material "GRAPHITE PSG" and of the obtained heat treated high spring-back material "GRAPHITE PSG HSB HT" are listed in table 4:

Table 4

| Graphite | PSG (comparative) | PSG HSB HT (reference *)) |
|---|---|---|
| Type | synthetic | treated synthetic |
| Wettability | hydrophilic | hydrophilic |
| $D_{10}$ [μm] | 6 | 8 |
| $D_{90}$ [μm] | 37 | 34 |
| Spring-back [%] | 12.3 | 53.2 |
| Lc [nm] | 145 | |
| c/2 [nm] | 0.3357 | <=0.3357 |
| degree of graphitization [%] | 96.5 | |
| B.E.T. [$m^2$/g] | 7.4 | 7.6 |
| *) not according to the invention | | |

**Claims**

1. Friction material, the friction material comprising graphite having a c/2 of 0.3358 nm or less, such as 0.3357 nm or less, or 0.3356 nm or less, and a spring-back of 65% or more.

2. Friction material according to claim 1, wherein the graphite has a degree of graphitisation of 95.3% or more, such as 96% or more, such as 97% or more.

3. Friction material according to any previous claim, wherein the graphite has a xylene density of 2.0 g/$cm^3$ or more, such as for example a xylene density of 2.1 g/$cm^3$ or more, such as for example a xylene density of 2.2 g/$cm^3$ or more, such as for example a xylene density of 2.23 g/$cm^3$ or more.

4. Friction material according to any previous claim, wherein the graphite has a crystallinity ($L_c$) of 50 nm or more.

5. Friction material according to any previous claim, wherein the graphite has a BET surface area of 9 $m^2$/g or less, such as for example a BET surface area of 8.0 $m^2$/g or less, or a BET surface area of 7.0 $m^2$/g or less, or a BET surface area of 6.0 $m^2$/g or less, or a BET surface area of 5.0 $m^2$/g or less, or a BET surface area of 4.5 $m^2$/g or less, or even a BET surface area of 4.0 $m^2$/g or less.

6. Friction material according to any previous claim, wherein the said graphite is a surface-modified graphite, such as for example a surface-modified natural graphite or a surface-modified synthetic graphite, or mixtures thereof, such as for example a surface-modified graphite by a heat treatment and optionally by a surface coating treatment coated graphite.

7. Friction material according to claim 6, wherein the said surface modification of the said graphite includes a surface modification by heat treatment and/or a surface coating treatment, such as a surface coating obtained by a chemical vapour deposition (CVD) process, optionally, wherein the said surface modification includes a further treatment to increase wettability, such as for example an oxidation treatment, and wherein the said surface coating can be done simultaneously with or separately from the heat treatment, such as for example subsequently to the heat treatment.

8. Friction material according to any previous claim, comprising from 0.1 wt.-% to 30 wt.-% of the graphite as defined in any previous claim, based on the total weight of the friction material.

9. Friction material according to any previous claim, which has a copper content of 5 wt.-% or less, for examples a copper content of 0.5 wt.-% or less.

10. Friction material according to any previous claim, which has an in-plane thermal conductivity of 1.5 W/mK or greater, as measured according to ASTM E1461 using Laserflash by NETZSCH LFA447.

11. Friction material according to any previous claim which has a friction coefficient of 0.5 or less.

12. Friction material according to any previous claim, further comprising one or more selected from the groups consisting of resin or cement binders, antimony trisulfide, copper, barium sulphate, metallic powders and fibres, mineral fibres, iron sulphides, coke, other natural, synthetic, expanded graphite, calcium carbonate, mica, talc and zirconia.

13. Method of making a friction material according to any one of claims 1 to 12, comprising the steps of

   (a) providing a graphite,
   (b) subjecting the graphite provided in step (a) to a heat treatment at 600°C or more for 30 minutes or more;
   (c) mixing the treated graphite obtained at the end of step (b) with further ingredients and treating to form a friction material, such as by compression moulding, or hot compression moulding or curing by heat treatment, or combinations of these.

14. Method according to claim 13, wherein the said graphite provided in step (a) is selected from a natural graphite, a synthetic graphite, or mixtures thereof.

15. Method according to claim 13 or 14, wherein the said heat treatment in step (b) includes a surface coating treatment, such as a CVD treatment or an amorphous carbon coating treatment.

16. Method according to claim 15, wherein the said heat treatment includes

   a first heat treatment, which is part of a surface coating treatment, such as CVD coating or pitch coating with subsequent carbonization, and
   a second heat treatment which is not part of a surface coating treatment and which may be carried out before or after the first heat treatment, for example as a post-treatment.

17. Method according to claim 16, wherein the said second heat treatment does not include a surface coating treatment such as a CVD treatment.

18. Use of a friction material as defined in any one of claims 1 to 12 in the production of brake pads, for example in the production of low-copper brake pads, or in the production of copper-free brake pads.

19. Use of a friction material as defined in any one of claims 1 to 12 in carbon brushes, bipolar plates for fuel cells, disc brakes, drum brakes, or clutches, for application in cars, heavy load vehicles, wind mills, or railways.

20. Brake pad comprising a friction material as defined in any one of claims 1 to 12, optionally for use in an electrically powered vehicle.

**Patentansprüche**

1. Reibungsmaterial, wobei das Reibungsmaterial Graphit mit einem c/2 von 0,3358 nm oder weniger, wie z.B. 0,3357 nm oder weniger oder 0,3356 nm oder weniger, und eine Rückfederung von 65 % oder mehr umfasst.

2. Reibungsmaterial nach Anspruch 1, wobei der Graphit einen Graphitierungsgrad von 95,3 % oder mehr, wie z.B. 96 % oder mehr, wie z.B. 97 % oder mehr, aufweist.

3. Reibungsmaterial nach einem vorhergehenden Anspruch, wobei der Graphit eine Xyloldichte von 2,0 $g/cm^3$ oder mehr, wie beispielsweise eine Xyloldichte von 2,1 $g/cm^3$ oder mehr, wie beispielsweise eine Xyloldichte von 2,2 $g/cm^3$ oder mehr, wie beispielsweise eine Xyloldichte von 2,23 $g/cm^3$ oder mehr, aufweist.

4. Reibungsmaterial nach einem vorhergehenden Anspruch, wobei der Graphit eine Kristallinität ($L_c$) von 50 nm oder mehr aufweist.

5. Reibungsmaterial nach einem vorhergehenden Anspruch, wobei der Graphit eine BET-Oberfläche von 9 $m^2/g$ oder weniger, wie beispielsweise eine BET-Oberfläche von 8,0 $m^2/g$ oder weniger oder eine BET-Oberfläche von 7,0 $m^2/g$ oder weniger oder eine BET-Oberfläche von 6,0 $m^2/g$ oder weniger oder eine BET-Oberfläche von 5,0 $m^2/g$

oder weniger oder eine BET-Oberfläche von 4,5 m$^2$/g oder weniger oder sogar eine BET-Oberfläche von 4,0 m$^2$/g oder weniger, aufweist.

6. Reibungsmaterial nach einem vorhergehenden Anspruch, wobei der Graphit ein oberflächenmodifizierter Graphit, wie beispielsweise ein oberflächenmodifizierter natürlicher Graphit oder ein oberflächenmodifizierter synthetischer Graphit oder Gemische davon, wie beispielsweise ein durch eine Wärmebehandlung oberflächenmodifizierter Graphit und wahlweise ein durch eine Oberflächenbeschichtungsbehandlung beschichteter Graphit, ist.

7. Reibungsmaterial nach Anspruch 6, wobei die Oberflächenmodifikation des Graphits eine Oberflächenmodifikation durch Wärmebehandlung und/oder eine Oberflächenbeschichtungsbehandlung, wie z.B. eine Oberflächenbeschichtung, die durch eine chemisches Dampfabscheidungsverfahren (CVD-Verfahren) erhalten ist, wahlweise, wobei die Oberflächenmodifikation eine weitere Behandlung zum Erhöhen der Benetzbarkeit, wie beispielsweise eine Oxidationsbehandlung, beinhaltet, und wobei die Oberflächenbeschichtung gleichzeitig mit oder getrennt von der Wärmebehandlung, wie beispielsweise der Wärmebehandlung nachfolgend, durchgeführt sein kann.

8. Reibungsmaterial nach einem vorhergehenden Anspruch, umfassend, bezogen auf das Gesamtgewicht des Reibungsmaterials, 0,1 Gew.-% bis 30 Gew.-% des Graphits, wie in einem vorhergehenden Anspruch definiert.

9. Reibungsmaterial nach einem vorhergehenden Anspruch, das einen Kupfergehalt von 5 Gew.-% oder weniger, beispielsweise einen Kupfergehalt von 0,5 Gew.-% oder weniger, aufweist.

10. Reibungsmaterial nach einem vorhergehenden Anspruch, das eine Wärmeleitfähigkeit in der Ebene, gemessen gemäß ASTM E1461 unter Benutzen von Laserblitz mittels NETZSCH LFA447, von 1,5 W/mK oder größer aufweist.

11. Reibungsmaterial nach einem vorhergehenden Anspruch, das einen Reibungskoeffizienten von 0,5 oder weniger aufweist.

12. Reibungsmaterial nach einem vorhergehenden Anspruch, ferner umfassend eines oder mehrere, ausgewählt aus den Gruppen, bestehend aus Harz oder Zementbindern, Antimontrisulfid, Kupfer, Bariumsulfat, Metallpulvern und -fasern, Mineralfasern, Eisensulfiden, Koks, anderem natürlichen, synthetischen, expandierten Graphit, Calciumcarbonat, Glimmer, Talkum und Zirkoniumdioxid.

13. Verfahren zum Herstellen eines Reibungsmaterials nach einem der Ansprüche 1 bis 12, umfassend die Schritte

(a) Bereitstellen eines Graphits,
(b) Unterwerfen des in Schritt (a) bereitgestellten Graphits einer Wärmebehandlung bei 600 °C oder mehr für 30 Minuten oder mehr;
(c) Mischen des behandelten Graphits, der am Ende von Schritt (b) erhalten wird, mit weiteren Inhaltsstoffen und Behandeln, um ein Reibungsmaterial zu bilden, wie z.B. durch Formpressen oder Heißformpressen oder Aushärten durch Wärmebehandlung oder Kombinationen dieser.

14. Verfahren nach Anspruch 13, wobei der Graphit, der in Schritt (a) bereitgestellt wird, aus einem natürlichen Graphit, einem synthetischen Graphit oder Gemischen davon ausgewählt wird.

15. Verfahren nach Anspruch 13 oder 14, wobei die Wärmebehandlung in Schritt (b) eine Oberflächenbeschichtungsbehandlung, wie z.B. eine CVD-Behandlung oder eine Beschichtungsbehandlung mit amorphem Kohlenstoff, beinhaltet.

16. Verfahren nach Anspruch 15, wobei die Wärmebehandlung beinhaltet:

eine erste Wärmebehandlung, die Teil einer Oberflächenbeschichtungsbehandlung, wie z.B. CVD-Beschichten oder Pechbeschichten mit anschließender Karbonisierung, ist, und
eine zweite Wärmebehandlung, die nicht Teil einer Oberflächenbeschichtungsbehandlung ist und die vor oder nach der ersten Wärmebehandlung, beispielsweise als eine Nachbehandlung, durchgeführt werden kann.

17. Verfahren nach Anspruch 16, wobei die zweite Wärmebehandlung keine Oberflächenbeschichtungsbehandlung, wie z.B. eine CVD-Behandlung, beinhaltet.

**18.** Benutzung eines Reibungsmaterials, wie definiert in einem der Ansprüche 1 bis 12, zur Herstellung von Bremsbelägen, beispielsweise zur Herstellung von Bremsbelägen mit niedrigem Kupfergehalt oder zur Herstellung von kupferfreien Bremsbelägen.

**19.** Benutzung eines Reibungsmaterials, wie in einem der Ansprüche 1 bis 12 definiert, in Kohlebürsten, Bipolarplatten für Brennstoffzellen, Scheibenbremsen, Trommelbremsen oder Kupplungen zur Anwendung in Personenkraftwagen, Schwerlastfahrzeugen, Windmühlen oder Schienenbahnen.

**20.** Bremsbelag, umfassend ein Reibungsmaterial, wie in einem der Ansprüche 1 bis 12 definiert, wahlweise zur Benutzung in einem elektrisch angetriebenen Fahrzeug.

**Revendications**

**1.** Matériau de frottement, le matériau de frottement comprenant du graphite présentant un c/2 de 0,3358 nm ou moins, comme 0,3357 nm ou moins, ou 0,3356 nm ou moins, et un retour élastique de 65 % ou plus.

**2.** Matériau de frottement selon la revendication 1, dans lequel le graphite présente un degré de graphitisation de 95,3 % ou plus, comme 96 % ou plus, comme 97 % ou plus.

**3.** Matériau de frottement selon l'une quelconque des revendications précédentes, dans lequel le graphite présente une densité de xylène de 2,0 $g/cm^3$ ou plus, comme par exemple une densité de xylène de 2,1 $g/cm^3$ ou plus, comme par exemple une densité de xylène de 2,2 $g/cm^3$ ou plus, comme par exemple une densité de xylène de 2,23 $g/cm^3$ ou plus.

**4.** Matériau de frottement selon l'une quelconque des revendications précédentes, dans lequel le graphite présente une cristallinité ($L_c$) de 50 nm ou plus.

**5.** Matériau de frottement selon l'une quelconque des revendications précédentes, dans lequel le graphite présente une surface BET de 9 $m^2/g$ ou moins, comme par exemple une surface BET de 8,0 $m^2/g$ ou moins, ou une surface BET de 7, 0 $m^2/g$ ou moins, ou une surface BET de 6,0 $m^2/g$ ou moins, ou une surface BET de 5,0 $m^2/g$ ou moins, ou une surface BET de 4,5 $m^2/g$ ou moins, ou même une surface BET de 4,0 $m^2/g$ ou moins.

**6.** Matériau de frottement selon l'une quelconque des revendications précédentes, dans lequel ledit graphite est un graphite modifié en surface, comme par exemple un graphite naturel modifié en surface ou un graphite synthétique modifié en surface, ou des mélanges de ceux-ci, comme par exemple un graphite modifié en surface par un traitement thermique et facultativement par un graphite appliqué en revêtement par un traitement de revêtement de surface.

**7.** Matériau de frottement selon la revendication 6, dans lequel ladite modification de surface dudit graphite inclut une modification de surface par traitement thermique et/ou un traitement de revêtement de surface, tel qu'un revêtement de surface obtenu par un procédé de dépôt chimique en phase vapeur (CVD), facultativement, dans lequel ladite modification de surface inclut un traitement supplémentaire pour augmenter la mouillabilité, comme par exemple un traitement d'oxydation, et dans lequel ledit revêtement de surface peut être effectué simultanément ou séparément du traitement thermique, tel que par exemple ultérieurement au traitement thermique.

**8.** Matériau de frottement selon l'une quelconque des revendications précédentes, comprenant de 0,1 % en poids à 30 % en poids du graphite tel que défini dans l'une quelconque des revendications précédentes, sur la base du poids total du matériau de frottement.

**9.** Matériau de frottement selon l'une quelconque des revendications précédentes, qui présente une teneur en cuivre de 5 % en poids ou moins, par exemple une teneur en cuivre de 0,5 % en poids ou moins.

**10.** Matériau de frottement selon l'une quelconque des revendications précédentes, qui présente une conductivité thermique dans le plan de 1,5 W/mK ou plus, telle que mesurée selon ASTM E1461 en utilisant un Laserflash par NETZSCH LFA447.

**11.** Matériau de frottement selon l'une quelconque des revendications précédentes, qui présente un coefficient de frottement de 0,5 ou moins.

**12.** Matériau de frottement selon l'une quelconque des revendications précédentes, comprenant en outre un ou plusieurs choisis parmi les groupes constitués par des liants de résine ou de ciment, le trisulfure d'antimoine, le cuivre, le sulfate de baryum, des poudres et fibres métalliques, des fibres minérales, des sulfures de fer, le coke, d'autres graphites naturels, synthétiques, expansés, le carbonate de calcium, le mica, le talc et la zircone.

**13.** Procédé de fabrication d'un matériau de frottement selon l'une quelconque des revendications 1 à 12, comprenant les étapes consistant à

(a) fournir un graphite

(b) soumettre le graphite fourni dans l'étape (a) à un traitement thermique à 600°C ou plus pendant 30 minutes ou plus ;

(c) mélanger le graphite traité obtenu à la fin de l'étape (b) avec des ingrédients supplémentaires et traiter pour former un matériau de frottement, comme par moulage par compression, ou moulage par compression à chaud ou durcissement par traitement thermique, ou des combinaisons de ceux-ci.

**14.** Procédé selon la revendication 13, dans lequel ledit graphite fourni dans l'étape (a) est choisi parmi un graphite naturel, un graphite synthétique, ou des mélanges de ceux-ci.

**15.** Procédé selon la revendication 13 ou 14, dans lequel ledit traitement thermique dans l'étape (b) comprend un traitement de revêtement de surface, tel qu'un traitement de dépôt chimique en phase vapeur (CVD) ou un traitement d'application en revêtement de carbone amorphe.

**16.** Procédé selon la revendication 15, dans lequel ledit traitement thermique comprend

un premier traitement thermique, qui fait partie d'un traitement de revêtement de surface, comme une application en revêtement CVD ou une application en revêtement de brai avec carbonisation ultérieure, et

un second traitement thermique qui ne fait pas partie d'un traitement de revêtement de surface et qui peut être effectué avant ou après le premier traitement thermique, par exemple en tant que post-traitement.

**17.** Procédé selon la revendication 16, dans lequel ledit second traitement thermique ne comprend pas de traitement de revêtement de surface tel qu'un traitement CVD.

**18.** Utilisation d'un matériau de frottement selon l'une quelconque des revendications 1 à 12 dans la fabrication de plaquettes de frein, par exemple dans la fabrication de plaquettes de frein à faible teneur en cuivre, ou dans la fabrication de plaquettes de frein exemptes de cuivre.

**19.** Utilisation d'un matériau de frottement tel que défini dans l'une quelconque des revendications 1 à 12 dans des balais en carbone, des plaques bipolaires pour piles à combustible, des freins à disque, des freins à tambour ou des embrayages, pour une application dans des voitures, des véhicules lourds, des moulins à vent ou des chemins de fer.

**20.** Plaquette de frein comprenant un matériau de frottement selon l'une quelconque des revendications 1 à 12, à utiliser facultativement dans un véhicule à moteur électrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3088764 A1
- WO 2017125592 A1
- WO 2018046767 A1
- EP 3124814 A1
- WO 2016008951 A
- EP 0977292 A

### Non-patent literature cited in the description

- **WAN et al.** *Journal of Applied Electrochemistry,* 2009, vol. 39, 1081
- **YOON et al.** *Journal of Power Sources,* 2001, vol. 94, 68
- **HUGH O. PIERSON.** Handbook Of Carbon, Graphite, Diamond And Fullerenes, Properties, Processing and Applications. Noyes Publications, 1993
- **KLUG ; ALEXANDER.** Xray diffraction Procedures. John Wiley & Sons Inc, 1967
- **N. IWASHITA ; C. RAE PARK ; H. FUJIMOTO ; M. SHIRAISHI ; M. INAGAKI.** *Carbon,* 2004, vol. 42, 701-714
- **P. SCHERRER.** *Gottinger-Nachrichten,* 1918, vol. 2, 98
- **BRUNAUER ; EMMET ; TELLER.** Adsorption of Gases in Multimolecular Layers. *J. Am. Chem. Soc.,* 1938, vol. 60, 309-319